# EUROPÄISCHE PATENTANMELDUNG

(11) **EP 4 324 574 A1**
(43) Veröffentlichungstag der Anmeldung: **21.02.2024**
(21) Anmeldenummer: 23192896.1
(22) Anmeldetag: 28.05.2020
(51) Int. Cl.: B21D 39/03, B21D 26/14, B21D 53/10, F16C 33/12, F16C 33/14

(54) **MEHRSCHICHTGLEITLAGER UND VERFAHREN ZUM HERSTELLEN EINES MEHRSCHICHTGLEITLAGERS**

(30) Priorität: 29.05.2019 AT 504952019
(62) Teilanmeldung aus: 20739237.4
(71) Anmelder: Miba Gleitlager Austria GmbH, 4663 Laakirchen (AT)
(72) Erfinder: REISENBERGER, Johannes, 4694 Ohlsdorf (AT); HÖLZL, Johannes Sebastian, 4880 Berg im Attergau (AT)
(74) Vertreter: Burger, Hannes Alfred

(57) **Zusammenfassung**

Die Erfindung betrifft ein Verfahren zum Herstellen eines Mehrschichtgleitlagers 1, umfassend die Verfahrensschritte:
- Bereitstellen eines Trägerkörpers 2 mit einer Trägerkörperverbindungsfläche 5, wobei an der Trägerkörperverbindungsfläche 5 eine Oberflächenstrukturierung 7 ausgebildet ist und wobei der Trägerkörper 2 an der Trägerkörperverbindungsfläche 5 ein Trägerkörpermaterial mit einer Trägerkörperfestigkeit aufweist;
- Bereitstellen eines Lagerkörpers 3 mit einer Lagerkörperverbindungsfläche 6, wobei der Lagerkörper 3 an der Lagerkörperverbindungsfläche 6 ein Lagerkörpermaterial mit einer Lagerkörperfestigkeit aufweist;
- Applizieren des Lagerkörpers 3 am Trägerkörper 2, wobei eine Trägerkörperverbindungsfläche 5 einer Lagerkörperverbindungsfläche 6 zugewandt wird;
- Aneinanderpressen des Lagerkörpers 3 und des Trägerkörpers 2, wobei der Lagerkörper 3 an der Lagerkörperverbindungsfläche 6 durch Einwirkung der Oberflächenstrukturierung 7 der Trägerkörperverbindungsfläche 5 plastisch verformt wird und eine formschlüssige Verbindung mit der Trägerkörperverbindungsfläche 5 bildet.

## Beschreibung

Die Erfindung betrifft ein Verfahren zum Herstellen eines Mehrschichtgleitlagers.

Die AT 511 434 A4 offenbart ein Verfahren zum Herstellen eines Mehrschichtgleitlagers.

Das aus der AT 511 434 A4 offenbarte Verfahren ist komplex und somit aufwendig in der Herstellung des Mehrschichtgleitlagers.

Aufgabe der vorliegenden Erfindung war es, die Nachteile des Standes der Technik zu überwinden und ein Verfahren zur Verfügung zu stellen, mittels welchem ein Mehrschichtgleitlager vereinfacht hergestellt werden kann.

Diese Aufgabe wird durch eine Vorrichtung und ein Verfahren gemäß den Ansprüchen gelöst.

Erfindungsgemäß ist ein Verfahren zum Herstellen eines Mehrschichtgleitlagers vorgesehen. Das Verfahren umfasst die Verfahrensschritte:
- Bereitstellen eines Trägerkörpers mit einer Trägerkörperverbindungsfläche, wobei an der Trägerkörperverbindungsfläche eine Oberflächenstrukturierung ausgebildet ist und wobei der Trägerkörper an der Trägerkörperverbindungsfläche ein Trägerkörpermaterial mit einer Trägerkörperfestigkeit aufweist;
- Bereitstellen eines Lagerkörpers mit einer Lagerkörperverbindungsfläche, wobei der Lagerkörper an der Lagerkörperverbindungsfläche ein Lagerkörpermaterial mit einer Lagerkörperfestigkeit aufweist;
- Applizieren des Lagerkörpers am Trägerkörper, wobei eine Trägerkörperverbindungsfläche einer Lagerkörperverbindungsfläche zugewandt wird;
- Aneinanderpressen des Lagerkörpers und des Trägerkörpers, wobei der Lagerkörper an der Lagerkörperverbindungsfläche durch Einwirkung der Oberflächenstrukturierung der Trägerkörperverbindungsfläche plastisch verformt wird und eine formschlüssige Verbindung mit der Trägerkörperverbindungsfläche bildet.

Das erfindungsgemäße Verfahren bringt den Vorteil mit sich, dass eine ausreichend festige Verbindung zwischen dem Lagerkörper und dem Trägerkörper erreicht werden kann, sodass das Mehrschichtgleitlager eine hohe Langzeitbeständigkeit aufweist und darüber hinaus einfach herzustellen ist.

Weiters kann vorgesehen sein, dass die Lagerkörperfestigkeit kleiner ist als die Trägerkörperfestigkeit. Dies bringt den Vorteil mit sich, dass das Material des Lagerkörpers einfach an das Material des Trägerkörpers angepasst werden kann bzw. mit diesem verpresst werden kann.

Weiters kann es zweckmäßig sein, wenn die Oberflächenstrukturierung der Trägerkörperverbindungsfläche Hinterschneidungen aufweist, in welche das Lagerkörpermaterial hineingepresst wird. Durch diese Maßnahme kann eine formschlüssige Verbindung zwischen dem Trägerkörper und dem Lagerkörper erreicht werden.

Weiters kann vorgesehen sein, dass die Oberflächenstrukturierung mittels eines Lasers hergestellt wird.

In einer weiteren Alternativvariante kann vorgesehen sein, dass die Oberflächenstrukturierung durch ein 3D-Druck-Verfahren hergestellt wird.

Ferner kann vorgesehen sein, dass die Oberflächenstrukturierung Stege aufweist, wobei die Stege beim Aneinanderpressen des Lagerkörpers und des Trägerkörpers verformt werden. Dies bringt den überraschenden Vorteil mit sich, dass die Verbindung zwischen dem Lagerkörper und dem Trägerkörper eine erhöhte Festigkeit aufweisen kann.

Darüber hinaus kann vorgesehen sein, dass die Stege im Wesentlichen im rechten Winkel zur Trägerkörperverbindungsfläche angeordnet sind.

Vorteilhaft ist auch eine Ausprägung, gemäß welcher vorgesehen sein kann, dass sich die Stege während dem Aneinanderpressen des Lagerkörpers und des Trägerkörpers quer zu deren Längserstreckung verbiegen. Hierdurch kann überraschenderweise eine gute Verbindung zwischen dem Trägerkörper und dem Lagerkörper erreicht werden.

Gemäß einer Weiterbildung ist es möglich, dass die Stege in einem Stegkopf eine Kopfquerschnittsbreite aufweisen und dass die Stege an einer Stegbasis eine Basisquerschnittsbreite aufweisen, wobei die Kopfquerschnittsbreite größer ist als die Basisquerschnittsbreite.

Ferner kann es zweckmäßig sein, wenn die Oberflächenstrukturierung der Trägerkörperverbindungsfläche durch Kreuzrändeln oder Links-Rechtsrändeln, hergestellt wird. Überraschenderweise bringt das Verfahren des Kreuzrändeln oder Links-Rechtsrändeln bzw. die dadurch hergestellten Oberflächen gegenüber allen anderen Oberflächenstrukturierungen oder glatten Oberflächen eine verbesserte Haltbarkeit zwischen dem Lagerkörper und dem Trägerkörper mit sich. Derartige Rändelverfahren sind in der DIN 8583-5, DIN 82, DIN 403 genormt. Insbesondere kann für die obig genannten Rändel laut Norm folgende Bezeichnung verwendet werden: RGE: Links-Rechtsrändel, Spitzen erhöht (Fischhaut); RGV: Links-Rechtsrändel, Spitzen vertieft; RKE: Kreuzrändel, Spitzen erhöht; RKV: Kreuzrändel, Spitzen vertieft.

Beim Rändeln wird zwischen dem spanlosen Rändeldrücken und dem spanenden Rändelfräsen unterschieden. Je nach Verfahren wird mit Rändelrädern das Profil hineingedrückt oder an einer Rändelfräse gefräst. An CNC-Drehmaschinen mit angetriebenen Werkzeugen können auch spezielle Rändelfräswerkzeuge eingesetzt werden, um ein Umspannen auf andere Maschinen zu vermeiden. Da die Bearbeitungskräfte beim Fräsen geringer ausfallen, findet es vorwiegend bei dünnen Werkstücken oder auf Bearbeitungszentren Verwendung. In einer weiteren Ausführung ist es auch denkbar, dass die beschriebene Struktur an rotationssymmetrischen Werkstücken mittels eines Drehmeißels bzw. mittels eines Drehverfahrens hergestellt wird, wobei dieses Drehverfahren ähnlich zum Gewindeschneiden erfolgen kann. Links-Rechtsrändel können hierbei durch ein Linksgewinde und ein Rechtsgewinde realisiert sein.

Insbesondere die obig beschriebenen durch Kreuzrändeln oder Links-Rechtsrändeln hergestellten Oberflächen in Verbindung mit einer zylindrisch oder in Form eines Zylindersegmentes ausgebildeten Trägerkörperverbindungsfläche und Lagerkörperverbindungsfläche bringen eine besonders verbesserte Haltbarkeit zwischen dem Trägerkörper und dem Lagerkörper mit sich.

Weiters ist es auch denkbar, dass der Trägerkörper in Form eines Zapfensegmentes, oder eines sonstigen Zylindersegmentes oder Hohlzylindersegmentes ausgebildet ist, welches aus einem Vollmaterial ohne Hohlräume oder Durchgangsbohrungen gebildet ist. Auch bei derartigen Ausführungen werden die im vorigen Absatz beschriebenen überraschenden Vorteile erreicht.

Insbesondere ist es denkbar, dass der Lagerkörper als Rotorhauptlagerung einer Windkraftanlage ausgebildet ist. In diesem Fall können der Lagerkörper und der Trägerkörper segmentiert ausgebildet sein. Derartige Lagersegmente sind in der EP2558718B1 offenbart, deren Inhalte durch Verweis einbezogen werden.

Darüber hinaus kann vorgesehen sein, dass die Oberflächenstrukturierung der Trägerkörperverbindungsfläche durch mechanische Bearbeitung hergestellt wird. Besonders bei großen Bauteilen können hierdurch Oberflächenstrukturen hergestellt werden, welche eine gute Bauteilfestigkeit aufweisen.

Weiters kann vorgesehen sein, dass das Aneinanderpressen des Lagerkörpers und des Trägerkörpers mittels eines Magnetkrafterzeugers erfolgt, welcher eine Magnetkraft auf den Lagerkörper aufbringt, wobei der Lagerkörper mittels des Magnetkrafterzeugers an den Trägerkörper angepresst wird. Dies bringt den überraschenden Vorteil mit sich, dass die Verbindungsqualität zwischen dem Trägerkörper und dem Lagerkörper erhöht werden kann und darüber hinaus die Verbindung zwischen den beiden Körpern einfach hergestellt werden kann.

Weiters kann vorgesehen sein, dass vor und/oder während dem Aneinanderpressen des Lagerkörpers und des Trägerkörpers, der Lagerkörpers und/oder der Trägerkörper über Raumtemperatur erwärmt werden. Dies bringt den Vorteil mit sich, dass Spannungen im Material reduziert werden. Außerdem bringt diese Maßnahme eine Verringerung der thermischen Ausdehnung unter Einsatzbedingungen mit sich. Insbesondere kann bei Aluminiumwerkstoffen eine Erwärmung zwischen 350°C und 430°C erfolgen. Bei Stahlwerkstoffen kann eine Erwärmung zwischen 550°C bis 650°C erfolgen.

Weiters ist es denkbar, dass der Lagerkörpers und der Trägerkörper auf gleiche Temperatur gebracht werden, welche zwischen -70°C und 350°C liegt.

Gemäß einer besonderen Ausprägung ist es möglich, dass der Magnetkrafterzeuger eine mit Strom beaufschlagte Spule aufweist, wobei mittels der Spule eine elektromagnetische Kraft auf den Lagerkörper aufgebracht wird. Besonders mittels einem derart ausgebildeten Magnetkrafterzeuger kann einfach eine Magnetkraft auf den Lagerkörper aufgebracht werden.

Weiters kann es zweckmäßig sein, wenn die Trägerkörperverbindungsfläche und die Lagerkörperverbindungsfläche zylindrisch ausgebildet sind. Dies bringt den Vorteil mit sich, dass bei einer Verformung des Lagerkörpers aufgrund der zylindrischen Geometrie eine Klemmung des Lagerkörpers am Trägerkörper erreicht werden kann.

Ferner kann vorgesehen sein, dass als Trägerkörper ein Zapfen bereitgestellt wird, wobei der Lagerkörper außenliegend auf den Trägerkörper aufgeschoben wird. Insbesondere kann es sich bei dem Trägerkörper um einen Zapfen eines Planetengetriebes einer Windkraftanlage handeln.

Darüber hinaus kann vorgesehen sein, dass die Oberflächenstrukturierung der Trägerkörperverbindungsfläche Kreuzrändel oder Links-Rechtsrändel aufweist..

Weiters kann vorgesehen sein, dass am Lagerkörper eine Gleitfläche ausgebildet ist, welche einen Axiallagerbereich und einen Radiallagerbereich aufweist. Ein Lagerkörper, welcher gleichzeitig für die Axiallagerung und für die Radiallagerung dient, bringt den überraschenden Vorteil mit sich, dass ein derartiges Gleitlager eine hohe Laufruhe bei geringer Fehleranfälligkeit aufweisen kann. Besonders wenn ein derart ausgebildeter Lagerkörper mittels eines Magnetkrafterzeugers auf den Trägerkörper aufgebracht wurde, kann eine hohe Präzision des kombinierten Axiallagers und Radiallagers erreicht werden. Für die Funktionalität der kombinierten Axiallagerung und Radiallagerung kann es vorteilhaft sein, wenn gleichzeitig die Oberflächenstrukturierung der Trägerkörperverbindungsfläche Kreuzrändel oder Links-Rechtsrändel aufweist.

Vorteilhaft ist auch eine Ausprägung, gemäß welcher vorgesehen sein kann, dass der Magnetkrafterzeuger hohlzylindrisch ausgebildet ist, wobei zum Verformen des Lagerkörpers der Magnetkrafterzeuger radial außenliegend um den Lagerkörper angeordnet wird. Durch einen derartigen Aufbau können Lagerkörper, welche außenliegend um den Trägerkörper angeordnet werden, einfach auf den Trägerkörper aufgepresst werden.

In einer alternativen Ausführungsvariante kann auch vorgesehen sein, dass der Trägerköper hohlzylindrisch ausgebildet ist und der Lagerkörper innerhalb des Trägerkörpers angeordnet ist, wobei der Magnetkrafterzeuger innerhalb des Lagerkörpers angeordnet wird. In diesem Ausführungsbeispiel wird mittels dem Magnetkrafterzeuger eine radial nach außen wirkende Kraft auf den Lagerkörper aufgebracht, wodurch der Lagerkörper radial nach außen gedrückt wird.

Ferner kann es zweckmäßig sein, wenn während dem Verformen des Lagerkörpers mittels einer ersten am Lagerkörper befestigten Elektrode und einer zweiten am Lagerkörper befestigten Elektrode eine Spannung an den Lagerkörper angelegt wird oder die erste Elektrode und die zweite Elektrode kurzgeschlossen werden. Dies bringt den Vorteil mit sich, dass die mittels dem Magnetkrafterzeuger auf den Lagerkörper aufgebrachte Magnetkraft erhöht werden kann.

Darüber hinaus kann vorgesehen sein, dass der Lagerkörper aus einem paramagnetischen Lagerkörpermaterial, einem ferromagnetischen Lagerkörpermaterial oder einem diamagnetischen Lagerkörpermaterial gebildet ist. Besonders Lagekörper, welche aus einem derartigen Material gebildet sind, sind einfach zum Verformen mittels der Magnetkraft ausgebildet.

Insbesondere kann vorgesehen sein, dass der Lagerkörper aus einer Aluminium-Zinn-Legierung gebildet ist. Lagerkörper auf Aluminiumbasis können z.B. AlSn40, AlSn20, AlSn25, AlSn10, AlSn6, etc. bilden.

Alternativ dazu kann vorgesehen sein, dass der Lagerkörper aus einer Kupfer-Zinn-Legierung gebildet ist. Einsetzbare Lagermetalle auf Kupferbasis wären beispielsweise CuPb22Sn2, CuPb10Sn10, CuPb15Sn7, CuSn6, CuSn4 Zn1. Insbesondere bleifreie Kupferlegierungen auf CuAl-, CuSn-, CuZn-, CuSnZn-, CuZnSn- sowie CuBi-Basis sind in Hinblick auf die geringere Umweltbelastung von Vorteil.

Weiters kann vorgesehen sein, dass der Lagerkörper aus dem Material CuSn5 gebildet ist. In Versuchen hat sich gezeigt, dass bei Verwendung eines Lagerkörpers aus diesem Material das erfindungsgemäße Verfahren überraschend effizient durchgeführt werden kann. Insbesondere kann gegenüber Lagerkörpern aus einem anderen Material eine überraschend hohe Festigkeit der Verbindung zwischen dem Lagerkörper und dem Trägerkörper erzielt werden.

Außerdem kann vorgesehen sein, dass der Lagerkörper eine Kupferbasislegierung aufweist, wobei die Kupferbasislegierung zwischen 0,1 Gew.-% und 3 Gew.-% Schwefel, zwischen 0,01 Gew.-% und 4 Gew.-% Eisen, zwischen 0 Gew.-%, insbesondere 0,001 Gew.-%, und 2 Gew.-% Phosphor, zumindest ein Element aus einer ersten Gruppe bestehend aus Zink, Zinn, Aluminium, Mangan, Nickel, Silizium, Chrom und Indium von in Summe zwischen 0,1 Gew.-% und 49 Gew.-%, wobei der Anteil an Zink zwischen 0 Gew.-% und 45 Gew.-% beträgt, der Anteil an Zinn zwischen 0 Gew.-% und 40 Gew.-% beträgt, der Anteil an Aluminium zwischen 0 Gew.-% und 15 Gew.-% beträgt, der Anteil an Mangan zwischen 0 Gew.-% und 10 Gew.-% beträgt, der Anteil an Nickel zwischen 0 Gew.-% und 10 Gew.-% beträgt, der Anteil an Silizium zwischen 0 Gew.-% und 10 Gew.-% beträgt, der Anteil an Chrom zwischen 0 Gew.-% und 2 Gew.-% beträgt, und der Anteil an Indium zwischen 0 Gew.-% und 10 Gew.-% beträgt, und zumindest ein Element aus einer zweiten Gruppe bestehend aus Silber, Magnesium, Kobalt, Titan, Zirkonium, Arsen, Lithium, Yttrium, Calcium, Vanadium, Molybdän, Wolfram, Antimon, Selen, Tellur, Bismut, Niob, Palladium in einem Anteil von jeweils zwischen 0 Gew.-% und 1,5 Gew.-%, wobei der Summenanteil der Elemente der zweiten Gruppe zwischen 0 Gew.-% und 2 Gew.-% beträgt, enthält und den Rest auf 100 Gew.-% Kupfer sowie aus der Herstellung der Elemente stammende Verunreinigungen bilden. Besonders an einem derart zusammengesetzten Lagerkörper lässt sich das erfindungsgemäße Verfahren überraschend gut anwenden, sodass eine überraschend gute Verbindung zwischen dem Lagerkörper und dem Trägerkörper erreicht werden kann.

In einer weiteren Alternativvariante kann vorgesehen sein, dass der Lagerkörper einen Kunststoff, insbesondere ein Polymeres Material, umfasst.

Weiters kann vorgesehen sein, dass vor dem Verformen des Lagerkörpers die Lagerkörperverbindungsfläche in einem Abstand zur Trägerkörperverbindungsfläche angeordnet wird und dass der Lagerkörper mittels des Magnetkrafterzeugers in Richtung zum Trägerkörper beschleunigt wird, sodass die Lagerkörperverbindungsfläche mit einer Aufschlaggeschwindigkeit zwischen 10m/s und 1000m/s, insbesondere zwischen 100m/s und 600m/s, bevorzugt zwischen 250m/s und 400m/s auf der Trägerkörperverbindungsfläche auftrifft. Besonders ein auf eine derartige Geschwindigkeit beschleunigter Lagerkörper kann eine ausreichend feste und Langzeit beständige Verbindung mit einem Trägerkörper eingehen, ohne dass hierbei die Oberfläche des Lagerkörpers oder des Trägerkörpers gesondert vorbereitet sein müssen. Somit kann allein durch die Aufprallenergie eine ausreichende Verformung des Lagerkörpers bzw. des Trägerkörpers erreicht werden, um eine stoffschlüssige Verbindung oder eine formschlüssige Verbindung zwischen diesen beiden Körpern zu erreichen.

Gemäß einer besonderen Ausprägung ist es möglich, dass ein zeitlich begrenzter Stromstoß in die mit Strom beaufschlagte Spule abgegeben wird. Hierdurch kann der Stromstoß eine erhöhte Stromstärke aufweisen, ohne dass dabei die Spule überhitzen würde.

Insbesondere kann vorgesehen sein, dass ein Kondensator aufgeladen wird, welcher die Energie für den zeitlich begrenzten Stromstoß bereitstellt und die benötigte Energiemenge für den Stromstoß innerhalb kurzer Zeit abgeben kann.

Entsprechend einer vorteilhaften Weiterbildung kann vorgesehen sein, dass der Stromstoß eine Stromstärke zwischen 10kA und 800kA, insbesondere zwischen 50kA und 600kA, bevorzugt zwischen 300kA und 480kA aufweist. Besonders bei einer derartigen Stromstärke kann eine ausreichend große Magnetkraft erzeugt werden, um den Lagerkörper verformen zu können.

Insbesondere kann vorgesehen sein, dass die in der Spule aufgebrachte Energie zwischen 2 kJ und 250 kJ, insbesondere zwischen 10 kJ und 150 kJ, bevorzugt zwischen 40 kJ und 60 kJ beträgt.

Weiters kann vorgesehen sein, dass der Strom in der Spule eine Frequenz zwischen 1 kHz und 100 kHz, insbesondere zwischen 5 kHz und 50 kHz, bevorzugt zwischen 15 kHz und 30 kHz aufweist.

Insbesondere kann es vorteilhaft sein, wenn die vom Magnetkrafterzeuger aufgebrachte Magnetkraft in einem lokal begrenzten Teilabschnitt auf den Lagerkörper wirkt. Durch diese Maßnahme kann die lokal auf den begrenzten Teilabschnitt des Lagerkörpers wirkende Magnetkraft erhöht werden.

Ferner kann vorgesehen sein, dass eine mit Strom beaufschlagbare Spule ausgebildet ist, welche zum Aufbringen einer Umformkraft auf den Lagerkörper ausgebildet ist.

Erfindungsgemäß ist eine Gleitlagerherstellvorrichtung ausgebildet. Die Gleitlagerherstellvorrichtung umfasst eine Haltevorrichtung zum Halten eines Trägerkörpers und/oder eines Lagerkörpers. Weiters ist eine mit Strom beaufschlagbare Spule ausgebildet, welche zum Aufbringen einer Umformkraft auf den Lagerkörper ausgebildet ist.

Ein Mehrschichtgleitlager im Sinne dieses Dokumentes ist ein Gleitlager, welches zumindest zwei Schichten, nämlich einen Trägerkörper und einen Lagerkörper aufweist. Insbesondere ist vorgesehen, dass der Trägerkörper und der Lagerkörper aus einem unterschiedlichen Material gebildet sind. Der Lagerkörper und/oder der Trägerkörper selbst können weitere Schichten aus unterschiedlichen Materialien aufweisen.

Die Kopfquerschnittsbreite kann zwischen 0,1mm und 30mm, insbesondere zwischen 0,5mm und 10mm, bevorzugt zwischen 1mm und 6mm betragen.

Die Basisquerschnittsbreite kann zwischen 0,01mm und 10mm, insbesondere zwischen 0,1mm und 3mm, bevorzugt zwischen 0,4mm und 2mm kleiner sein, als die Kopfquerschnittsbreite.

Weiters kann vorgesehen sein, dass der Lagerkörper durch ein Gießverfahren, insbesondere durch ein Beltcaster-Gießverfahren, hergestellt wird. Dies bringt den Vorteil mit sich, dass das Material des Lagerkörpers so gewählt werden kann, dass des möglichst gute Gleitlagereigenschaften aufweist. Insbesondere können mittels eines derartiges Gießverfahrens homogen aufgebaute Legierungen gegossen werden. Insbesondere kann durch dieses Gießverfahren ein länglicher Stab hergestellt werden, aus welchem die einzelnen Lagerkörper von einzelnen Mehrschichtgleitlagern gefertigt werden können.

Darüber hinaus kann vorgesehen sein, dass der Lagerkörper durch ein Stranggussverfahren, wie etwa in Form eines Rohr-Stranggusses hergestellt wird. Besonders Lagerkörper mit Kupfermaterialien können einfach nach diesem Verfahren hergestellt werden.

Weiters kann vorgesehen sein, dass der Trägerkörper und/oder der Lagerkörper zumindest teilweise als Flacherzeugnis ausgebildet sind, wobei insbesondere die Gleitfläche als ebene Fläche ausgebildet ist. Das erfindungsgemäße Verfahren bringt den überraschenden Vorteil mit sich, dass auch bei Flacherzeugnissen eine ausreichend feste Verbindung zwischen dem Trägerkörper und dem Lagerkörper hergestellt werden kann.

Weiters kann natürlich auch vorgesehen sein, dass der Trägerkörper zylindrisch oder hohlzylindrisch ausgebildet ist und dass der Lagerkörper als Zylindersegment ausgebildet ist. Auch ein als Zylindersegment ausgebildeter Lagerkörper kann durch das erfindungsgemäße Verfahren überraschenderweise ohne zusätzliche Vorkehrungen mit einer ausreichenden Festigkeit mit dem Trägerkörper verbunden werden.

Darüber hinaus kann vorgesehen sein, dass der Trägerkörper an dessen Trägerkörperverbindungsfläche ein Formelement, wie etwa eine Nut aufweist, wobei beim Verformen des Lagerkörpers dieser in das Formelement hineingepresst wird, sodass eine Gleitfläche des Lagerkörpers eine an das Formelement angepasste Formgebung aufweist. Dies bringt den Vorteil mit sich, dass in der Gleitfläche des Lagerkörpers gewünschte Formelemente, wie etwa Schmierstoffnuten, einfach eingebracht werden können. Hierbei kann vorgesehen sein, dass der Magnetkrafterzeuger im Bereich dieser Formelemente eine erhöhte Kraftwirkung auf den Lagerkörper aufbringt, sodass der Lagerkörper möglichst gut in die im Trägerkörper ausgebildeten Formelemente eingepresst werden kann. Darüber hinaus ist es auch denkbar, dass im Trägerkörper mehrere einzelne Formelemente, beispielsweise einzelne kleine Taschen, ausgebildet sind, welche beispielsweise dazu genutzt werden können, um im gefügten Zustand einzelne Schmierstoffpolster an der Gleitfläche des Lagerkörpers bereit zu stellen.

Weiters ist es denkbar, dass die mittels obigem Gießverfahren gegossenen Stäbe abgelängt werden, um daraus die Lagerkörper zu fertigen.

Erfindungsgemäß ist ein Mehrschichtgleitlager vorgesehen. Das Mehrschichtgleitlager umfasst:
- Einen Trägerkörper mit einer Trägerkörperverbindungsfläche, wobei an der Trägerkörperverbindungsfläche eine Oberflächenstrukturierung ausgebildet ist und wobei der Trägerkörper an der Trägerkörperverbindungsfläche ein Trägerkörpermaterial mit einer Trägerkörperfestigkeit aufweist;
- Einen Lagerkörper mit einer Lagerkörperverbindungsfläche, wobei der Lagerkörper an der Lagerkörperverbindungsfläche ein Lagerkörpermaterial mit einer Lagerkörperfestigkeit aufweist,
wobei der Lagerkörper am Trägerkörper appliziert ist, wobei eine Trägerkörperverbindungsfläche einer Lagerkörperverbindungsfläche zugewandt ist und wobei der Lagerkörper an der Lagerkörperverbindungsfläche plastisch in die Oberflächenstrukturierung der Trägerkörperverbindungsfläche verformt ist und eine formschlüssige Verbindung mit der Trägerkörperverbindungsfläche bildet.

Zum besseren Verständnis der Erfindung wird diese anhand der nachfolgenden Figuren näher erläutert.

Es zeigen jeweils in stark vereinfachter, schematischer Darstellung:
- Fig. 1: eine schematische Schnittdarstellung eines ersten Ausführungsbeispiels eines Mehrschichtgleitlagers mit zylindrischer Gleitfläche;
- Fig. 2: eine schematische Schnittdarstellung eines zweiten Ausführungsbeispiels eines Mehrschichtgleitlagers mit ebener Gleitfläche;
- Fig. 3: eine Detailansicht einer Oberflächenstrukturierung eines Mehrschichtgleitlagers;
- Fig. 4: Verfahrensschritte zum Herstellen eines Mehrschichtgleitlagers;
- Fig. 5: ein weiteres Verfahren zum Herstellen eines Mehrschichtgleitlagers;
- Fig. 6: ein Verfahren zum Herstellen eines ebenen Mehrschichtgleitlagers;
- Fig. 7: Verfahrensschritte zum Herstellen eines Mehrschichtgleitlagers mit verformten Stegen;
- Fig. 8: eine Querschnittdarstellung eines Ausführungsbeispiels eines Mehrschichtgleitlagers mit einem Oberflächenelement;
- Fig. 9: ein Ausführungsbeispiel eines Trägerkörpers mit einer Oberflächenstrukturierung in Form einer Rändelung;
- Fig. 10: ein Ausführungsbeispiel eines Lagerkörpers mit einem Axiallagerbereich und einem Radiallagerbereich.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

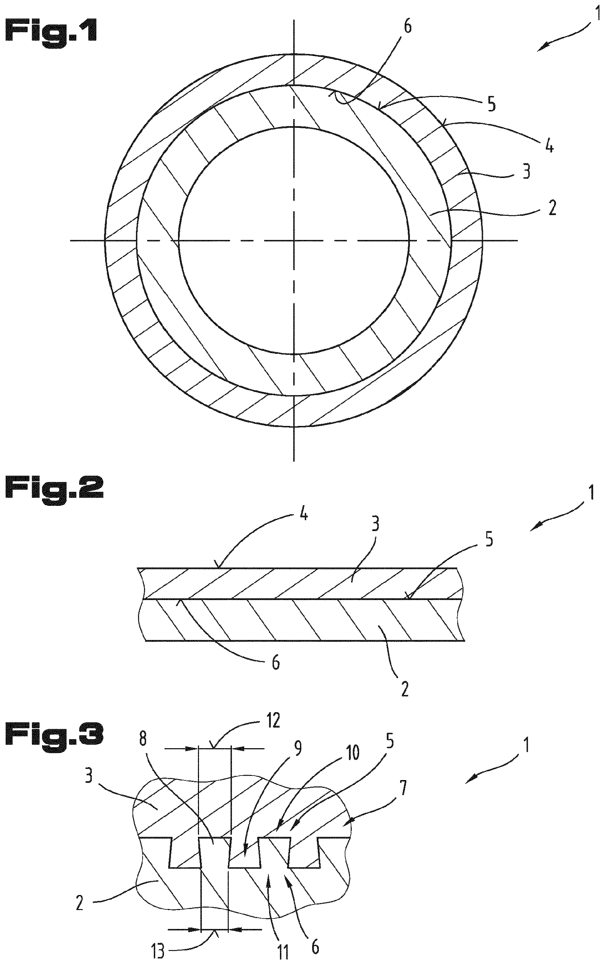

Fig. 1 zeigt eine schematische Darstellung eines Mehrschichtgleitlagers 1.

Wie aus Fig. 1 ersichtlich, umfasst das Mehrschichtgleitlager 1 zumindest einen Trägerkörper 2 und einen Lagerkörper 3. Der Trägerkörper 2 dient dazu, um dem Mehrschichtgleitlager 1 die notwendige Stabilität zu verleihen. Am Lagerkörper 3 ist eine Gleitfläche 4 ausgebildet.

Der Trägerkörper 2 weist eine Trägerkörperverbindungsfläche 5 auf, welche im einsatzbereiten Zustand des Mehrschichtgleitlagers 1 an einer Lagerkörperverbindungsfläche 6 des Lagerkörpers 3 anliegt.

Weiters ist es auch denkbar, dass der Trägerkörper 2 und/oder der Lagerkörper 3 aus mehreren einzelnen Schichten mit unterschiedlichen Materialzusammensetzungen aufgebaut ist. Insbesondere kann vorgesehen sein, dass der Lagerkörper 3 im Bereich der Gleitfläche 4 beispielsweise eine Oberflächenbeschichtung aufweist.

Wie aus Fig. 1 ersichtlich, kann vorgesehen sein, dass der Trägerkörper 2 und der Lagerkörper 3 zylindrisch oder hohlzylindrisch ausgebildet sind und die Trägerkörperverbindungsfläche 5 und die Lagerkörperverbindungsfläche 6 eine zylindrische Fläche aufweisen.

Hierbei kann vorgesehen sein, dass der Trägerkörper 2 innerhalb des Lagerkörpers 3 angeordnet ist, insbesondere kann hierbei vorgesehen sein, dass die Trägerkörperverbindungsfläche 5 am Außenmantel des Trägerkörpers 2 ausgebildet ist und dass die Lagerkörperverbindungsfläche 6 am Innenmantel des Lagerkörpers 3 ausgebildet ist. Insbesondere kann vorgesehen sein, dass der Trägerkörper 2 und der Lagerkörper 3 koaxial zueinander angeordnet sind.

In einem weiteren, nicht dargestellten Ausführungsbeispiel kann auch vorgesehen sein, dass der Trägerkörper 2 als vollzylindrischer Körper, beispielsweise in Form eines Zapfens, ausgebildet ist.

In einem weiteren nicht dargestellten Ausführungsbeispiel kann vorgesehen sein, dass der Lagerkörper 3 innenliegend am Trägerkörper 2 angeordnet ist, wobei die Gleitfläche 4 an der inneren Mantelfläche des Lagerkörpers 3 ausgebildet ist.

Ein Mehrschichtgleitlager 1, wie es in Fig. 1 dargestellt ist, dient zur rotatorischen Lagerung von zwei Bauteilen relativ zueinander.

In der Fig. 2 ist eine weitere und gegebenenfalls für sich eigenständige Ausführungsform des Mehrschichtgleitlagers 1 gezeigt, wobei wiederum für gleiche Teile gleiche Bezugszeichen bzw. Bauteilbezeichnungen wie in der vorangegangenen Fig. 1 verwendet werden. Um unnötige Wiederholungen zu vermeiden, wird auf die detaillierte Beschreibung in der vorangegangenen Fig. 1 hingewiesen bzw. Bezug genommen.

Fig. 2 zeigt ein weiteres Ausführungsbeispiel des Mehrschichtgleitlagers 1. Wie aus Fig. 2 ersichtlich, kann vorgesehen sein, dass der Trägerkörper 2 und/oder der Lagerkörper 3 zumindest teilweise eben ausgebildet sind. Insbesondere kann vorgesehen sein, dass die Gleitfläche 4 eine ebene Fläche bildet. Weiters kann vorgesehen sein, dass die Trägerkörperverbindungsfläche 5 und die Lagerkörperverbindungsfläche 6 ebenfalls eine ebene Fläche bilden, in welche dieser miteinander verbunden sind. Ein derart ausgebildetes Mehrschichtgleitlager 1 kann beispielsweise als Linearlager eingesetzt werden.

Weiters ist es auch denkbar, dass das Mehrschichtgleitlager 1 in Form eines Lagerpads ausgebildet ist.

In der Fig. 3 ist eine weitere und gegebenenfalls für sich eigenständige Ausführungsform des Mehrschichtgleitlagers 1 gezeigt, wobei wiederum für gleiche Teile gleiche Bezugszeichen bzw. Bauteilbezeichnungen wie in den vorangegangenen Figuren 1 und 2 verwendet werden. Um unnötige Wiederholungen zu vermeiden, wird auf die detaillierte Beschreibung in der vorangegangenen Figuren 1 und 2 hingewiesen bzw. Bezug genommen.

Fig. 3 zeigt in einer Schnittdarstellung im Detail ein erstes Ausführungsbeispiel einer Verbindung zwischen der Trägerkörperverbindungsfläche 5 und der Lagerkörperverbindungsfläche 6. In diesem Ausführungsbeispiel ist somit der Trägerkörper 2 fest mit dem Lagerkörper 3 verbunden und das Mehrschichtgleitlager 1 befindet sich somit in seinem einsatzfähigen Zustand.

Die Verbindung zwischen dem Trägerkörper 2 und dem Lagerkörper 3, wie sie in Fig. 3 dargestellt ist, kann sowohl bei einem zylindrischen Mehrschichtgleitlager 1 als auch bei einem ebenen Mehrschichtgleitlager 1, wie es in Fig. 2 dargestellt ist, Anwendung finden.

Wie aus Fig. 3 ersichtlich, ist vorgesehen, dass am Trägerkörper 2 an der Trägerkörperverbindungsfläche 5 eine Oberflächenstrukturierung 7 ausgebildet ist, welche eine formschlüssige Verbindung mit der Lagerkörperverbindungsfläche 6 des Lagerkörpers 3 bildet.

Wie aus Fig. 3 ersichtlich, kann vorgesehen sein, dass die Oberflächenstrukturierung 7 einzelne Stege 8 umfasst, wobei zwischen den einzelnen Stegen 8 eine Hinterschneidung 9 ausgebildet ist. In die Hinterschneidung 9 wird während dem Fügevorgang des Lagerkörpers 3 mit dem Trägerkörper 2 das Material des Lagerkörpers 3 hineingepresst bzw. hineinverformt, sodass sich die formschlüssige Verbindung zwischen dem Trägerkörper 2 und dem Lagerkörper 3 ausbildet.

Die einzelnen Stege 8 erstrecken sich in Blickrichtung auf die Zeichenebene der Fig. 3 in einer Längserstreckung des Trägerkörpers 2. Insbesondere kann vorgesehen sein, dass das Schnittprofil des Mehrschichtgleitlagers 1 über die Längserstreckung des Trägerkörpers 2 eine gleichbleibende Formgebung aufweist.

Wie aus Fig. 3 weiters ersichtlich, kann vorgesehen sein, dass die einzelnen Stege 8 jeweils einen Stegkopf 10 und eine Stegbasis 11 aufweisen. Der Stegkopf 10 weist eine Kopfquerschnittsbreite 12 auf. Die Stegbasis 11 weist eine Basisquerschnittsbreite 13 auf. Insbesondere kann vorgesehen sein, dass die Kopfquerschnittsbreite 12 größer ist, als die Basisquerschnittsbreite 13. Mit anderen Worten ausgedrückt, kann der Steg 8 vom Stegkopf 10 zur Stegbasis 11 verjüngend ausgebildet sein.

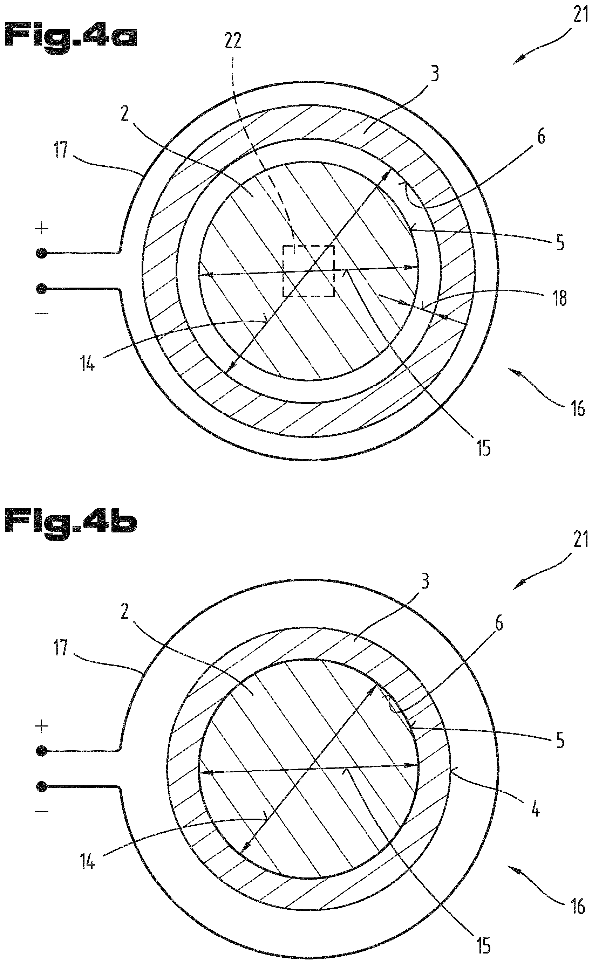

In der Fig. 4a und 4b ist eine weitere und gegebenenfalls für sich eigenständige Ausführungsform des Mehrschichtgleitlagers 1 gezeigt, wobei wiederum für gleiche Teile gleiche Bezugszeichen bzw. Bauteilbezeichnungen wie in den vorangegangenen Figuren 1 bis 3 verwendet werden. Um unnötige Wiederholungen zu vermeiden, wird auf die detaillierte Beschreibung in der vorangegangenen Figuren 1 bis 3 hingewiesen bzw. Bezug genommen.

Fig. 4a zeigt einen ersten Verfahrensschritt eines Verfahrensablaufs zum Verbinden des Trägerkörpers 2 mit dem Lagerkörper 3. In diesem ersten Verfahrensschritt werden der Trägerkörper 2 und der Lagerkörper 3 bereitgestellt. Insbesondere kann hierbei vorgesehen sein, dass die Lagerkörperverbindungsfläche 6 in ihrem unverformten Zustand einen Durchmesser 14 aufweist. Die Trägerkörperverbindungsfläche 5 kann einen Durchmesser 15 aufweisen. Insbesondere kann vorgesehen sein, dass der Durchmesser 14 der Lagerkörperverbindungsfläche 6 größer ist als der Durchmesser 15 der Trägerkörperverbindungsfläche 5 sodass der Lagerkörper 3 einfach über den Trägerkörper 2 geschoben werden kann. Die Lagerkörperverbindungsfläche 6 und die Trägerkörperverbindungsfläche 5 sind somit in einem Abstand 18 zueinander angeordnet.

Weiters ist eine Gleitlagerherstellvorrichtung 21 vorgesehen, welche eine Haltevorrichtung 22 zum Halten eines Trägerkörpers 2 und/oder eines Lagerkörpers 3 umfasst.

Die Gleitlagerherstellvorrichtung 21 umfasst darüber hinaus einen Magnetkrafterzeuger 16, welcher eine Spule 17 aufweist. Insbesondere kann vorgesehen sein, dass die Spule 17 in Umfangsrichtung außenliegend um den Lagerkörper 3 herum angeordnet ist.

Wenn an der Spule 17 eine Stromquelle, insbesondere eine Wechselstromquelle oder eine Stromquelle mit veränderlicher Stromstärke angelegt wird, so wird durch den stromdurchflossenen Leiter ein Magnetfeld erzeugt. Dieses Magnetfeld wirkt auf den Lagerkörper 3, in welchem nach der Lenz'schen Regel ein Stromfluss induziert wird. Aufgrund dieses Stromflusses wirkt auf den Lagerkörper 3 die sogenannte Lorentzkraft.

Die Spule 17 ist in einem Formstabilen Gehäuse aufgenommen. Somit kann durch die Lorentzkraft der Lagerkörper 3 radial nach innen verformt werden. Ein als Hohlzylinder ausgebildeter Lagerkörper 3, wie er in Fig. 4a dargestellt ist, eignet sich besonders gut dazu, um Strom induzieren zu können.

Durch die Verformung des Lagerkörpers 3 mittels der Magnetkraft kann der Lagerkörper 3 auf den Trägerkörper 2 aufgepresst werden, sodass eine feste Verbindung zwischen dem Trägerkörper 2 und dem Lagerkörper 3 erreicht wird.

Alternativ ist es natürlich auch denkbar, dass der Lagerkörper 3 mittels eines herkömmlichen Pressenmittels, wie etwa mittels einer Hydraulikpresse oder einer elektrisch angetriebenen mechanischen Presse verformt wird.

Die feste Verbindung zwischen dem Trägerkörper 2 und dem Lagerkörper 3 kann hierbei schon alleine durch Kraftschluss erreicht werden, wie dies in der Darstellung in Fig. 4b ersichtlich ist.

Weiters ist es auch denkbar, dass die Trägerkörperverbindungsfläche 5 die Oberflächenstrukturierung 7 aufweist und während der Verformung des Lagerkörpers 3 der Lagerkörper 3 teilweise in die Hinterschneidungen 9 des Trägerkörpers 2 eingepresst wird. Somit kann zusätzlich zur kraftschlüssigen Verbindung auch eine formschlüssige Verbindung erreicht werden.

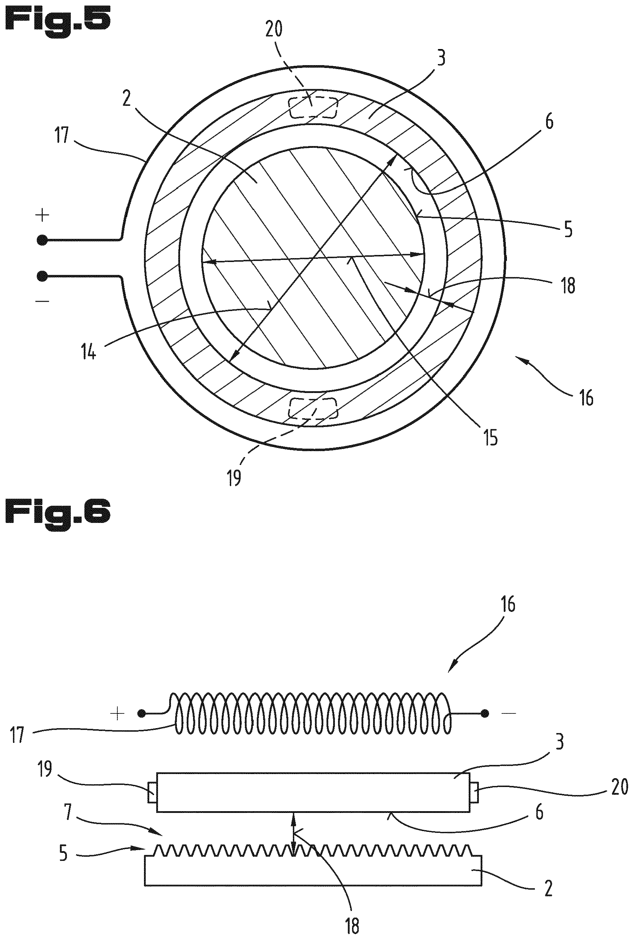

In der Fig. 5 ist ein weiterer und gegebenenfalls für sich eigenständiger Verfahrensablauf bzw. Aufbau zum Herstellen eines Mehrschichtgleitlagers 1 gezeigt, wobei wiederum für gleiche Teile gleiche Bezugszeichen bzw. Bauteilbezeichnungen wie in der vorangegangenen Fig. 4 verwendet werden. Um unnötige Wiederholungen zu vermeiden, wird auf die detaillierte Beschreibung in der vorangegangenen Fig. 4 hingewiesen bzw. Bezug genommen.

Wie aus Fig. 5 ersichtlich, kann vorgesehen sein, dass am Lagerkörper 3 eine erste Elektrode 19 und eine zweite Elektrode 20 angeordnet sind. Die beiden Elektroden 19, 20 können beispielsweise einander gegenüberliegend an den zwei unterschiedlichen Stirnseiten des Lagerkörpers 3 angeordnet sein. Weiters ist es auch denkbar, dass die beiden Elektroden 19, 20 diametral gegenüberliegend an derselben Stirnseite des Lagerkörpers 3 angeordnet sind.

Die beiden Elektroden 19, 20 können miteinander kurzgeschlossen sein, um entsprechend der Lenz'schen Regel die Kraftwirkung auf den Lagerkörper 3 zu verstärken. Insbesondere wird bei dieser Ausführungsvariante der durch die Magnetkraft des Magnetkrafterzeugers 16 im Lagerkörper 3 induzierte Strom verbessert genutzt, um im Lagerkörper 3 ebenfalls Magnetkraft aufzubringen.

In einer alternativen Ausführungsvariante ist es auch denkbar, dass die erste Elektrode 19 und die zweite Elektrode 20 an eine Stromquelle, insbesondere eine Wechselstromquelle, angelegt werden, um die Kraftwirkung auf den Lagerkörper 3 zu verstärken.

In der Fig. 6 ist ein weiterer und gegebenenfalls für sich eigenständiger Verfahrensablauf bzw. Aufbau zum Herstellen eines Mehrschichtgleitlagers 1 gezeigt, wobei wiederum für gleiche Teile gleiche Bezugszeichen bzw. Bauteilbezeichnungen wie in der vorangegangenen Fig. 4 verwendet werden. Um unnötige Wiederholungen zu vermeiden, wird auf die detaillierte Beschreibung in der vorangegangenen Fig. 4 hingewiesen bzw. Bezug genommen.

Wie aus Fig. 6 ersichtlich, können dieselben Prinzipien genutzt werden, welche in Fig. 4 beschrieben wurden. Insbesondere kann mittels dem Magnetkrafterzeuger 16 eine Krafteinwirkung auf den Lagerkörper 3 erzeugt werden, sodass dieser an den Trägerkörper 2 angepresst wird und mit diesem verbunden wird.

Vor dem Fügevorgang kann, wie aus Fig. 6 ersichtlich, der Lagerkörper 3 im Abstand 18 zum Trägerkörper 2 angeordnet sein, sodass durch Aufbringung der Magnetkraft der Lagerkörper 3 zum Trägerkörper 2 hin beschleunigt werden kann.

Auch bei einer ebenen Anordnung des Lagerkörpers 3, wie sie in Fig. 6 dargestellt ist, können der Lagerkörper 3 und der Trägerkörper 2 ohne dem Vorhandensein einer Oberflächenstrukturierung 7 fest miteinander verbunden werden. Hierbei wird die Aufprallenergie des Lagerkörpers 3 auf den Trägerkörper 2 genutzt, um die Trägerkörperverbindungsfläche 5 des Trägerkörpers 2 zumindest abschnittsweise zu verformen und somit eine stoffschlüssige bzw. eine formschlüssige Verbindung zwischen dem Lagerkörper 3 und dem Trägerkörper 2 herzustellen.

Wie aus Fig. 6 weiters ersichtlich, kann hierbei ebenfalls zur Verstärkung der Magnetkraft die erste Elektrode 19 und die zweite Elektrode 20 am Lagerkörper 3 angeordnet sein, wobei diese entweder wieder kurzgeschlossen sein können oder an einer Stromquelle anliegen.

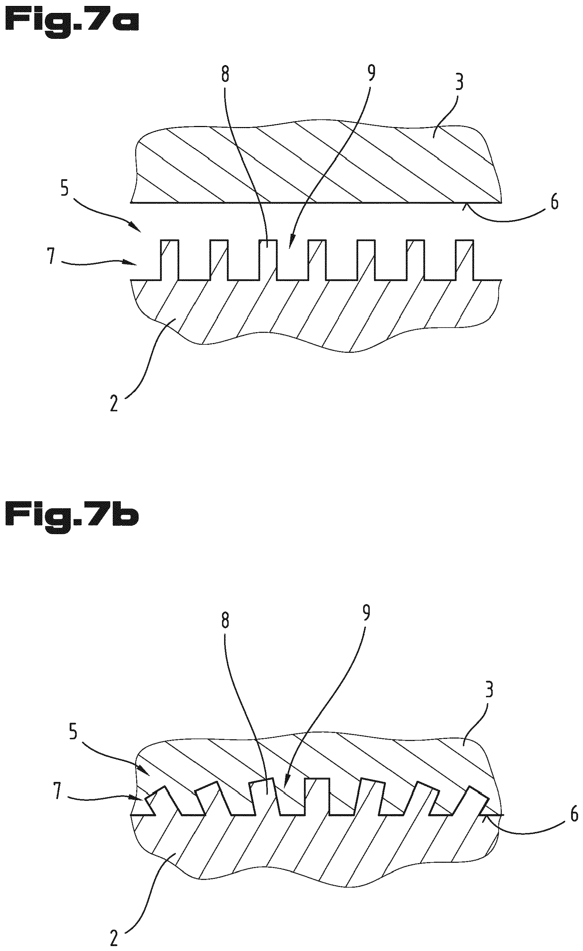

In den Fig. 7a und 7b ist in einer Detailansicht ein möglicher Verfahrensablauf zum Fügen des Lagerkörpers 3 und des Trägerkörpers 2 gezeigt. Wie aus den Fig. 7 ersichtlich, kann vorgesehen sein, dass der Lagerkörper 3 und der Trägerkörper 2 derart ausgebildet sind, dass die einzelnen Stege 8 der Oberflächenstrukturierung 7 des Trägerkörpers 2 während dem Verpressvorgang mit dem Lagerkörper 3 sich quer zu deren Längserstreckung verformen, sodass durch diese Verformung ein Formschluss zwischen dem Trägerkörper 2 und dem Lagerkörper 3 erreicht wird. Dies kann insbesondere dadurch erreicht werden, dass während dem Fügevorgang zwischen dem Trägerkörper 2 und dem Lagerkörper 3, das Material des Lagerkörpers 3 quer zur Fügerichtung seitlich verdrängt wird und somit die Stege 8 der Oberflächenstrukturierung 7 des Trägerkörpers 2 verformt werden.

In diesem Fall ist es nicht notwendig, dass die einzelnen Stege 8 des Trägerkörpers 2 vom Stegkopf 10 zur Stegbasis 11 verjüngend ausgebildet sind, um einen Formschluss zu erreichen.

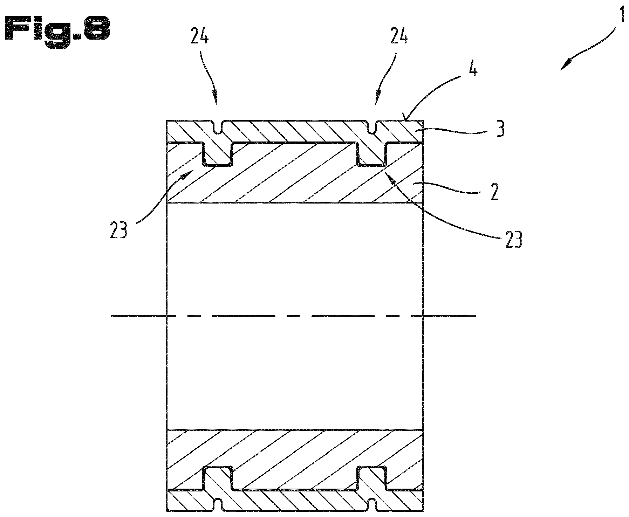

Fig. 8 zeigt das Mehrschichtgleitlager 1 in einer Schnittdarstellung. Wie aus Fig. 8 ersichtlich, kann vorgesehen sein, dass der Trägerkörper 2 an dessen Trägerkörperverbindungsfläche 5 ein Formelement 23, in Form einer Nut aufweist. Beim Verformen des Lagerkörpers 3 wird dieser in das Formelement 23 hineingepresst wird, sodass eine Gleitfläche 4 des Lagerkörpers 3 an das Formelement 23 angepasste Oberflächenelemente 24 aufweist.

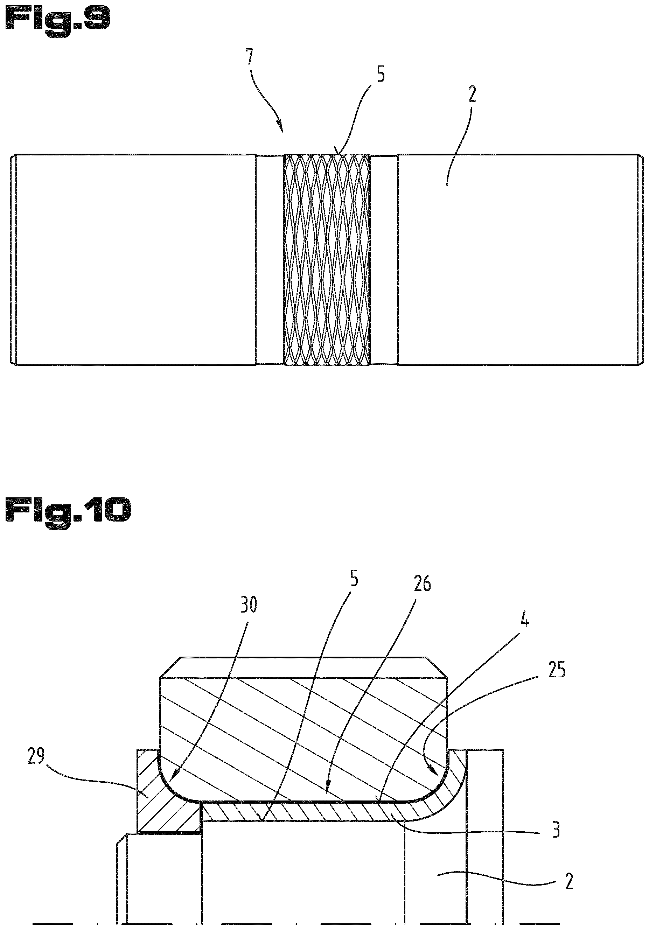

Fig. 9 zeigt ein Ausführungsbeispiel des Trägerkörpers 2 mit einer Oberflächenstrukturierung 7 in Form von Links-Rechtsrändel. Der Trägerkörper ist in Form eines Zapfens ausgebildet, welcher beispielsweise für die Lagerung eines Planetenrades eines Planetengetriebes einer Windkraftanlage verwendet werden kann.

Fig. 10 zeigt in teilweiser Längsschnittdarstellung ein weiteres Ausführungsbeispiel des Trägerkörpers 2, welcher in Form eines Zapfens, beispielsweise eines Planetenradzapfens eines Planetengetriebes für eine Windkraftanlage, ausgebildet ist. Am Trägerkörper 2 ist der Lagerkörper 3 appliziert, wobei die Gleitfläche 4 des Lagerkörpers 3 einen Axiallagerbereich 25 und einen Radiallagerbereich 26 aufweist. Der Radiallagerbereich 26 kann zylindrisch ausgebildet sein. Der Axiallagerbereich 25 kann direkt an den Radiallagerbereich 26 anschließen.

Insbesondere kann vorgesehen sein, dass in einem Längsschnitt gesehen der Axiallagerbereich 25 bogenförmig ausgebildet ist und der Radiallagerbereich 26 einen tangentialen Übergang aufweist, wodurch eine verbesserte Lagersituation erreicht werden kann.

In einer alternativen, nicht dargestellten Ausführungsvariante kann auch vorgesehen sein, dass der Axiallagerbereich 25 im Längsschnitt gesehen ebenfalls eine Gerade bildet, welche in einem Winkel zur Geraden des Radiallagerbereiches 26 angeordnet ist. Insbesondere kann der der Axiallagerbereich 25 im Längsschnitt gesehen in einem Winkel von 90° zum Radiallagerbereich 26 angeordnet sein. Hierbei kann vorgesehen sein, dass zwischen dem Axiallagerbereich 25 und dem Radiallagerbereich 26 ein Übergangsradius oder eine Übergangsfase ausgebildet ist.

Wie aus Fig. 10 ersichtlich, kann vorgesehen sein, dass schon die Trägerkörperverbindungsfläche 5 die Form der Gleitfläche 4 und somit des Axiallagerbereiches 25 und des Radiallagerbereiches 26 vorgibt.

Wie aus Fig. 10 weiters ersichtlich, kann ein Planetenrad 27 ausgebildet sein, welches am Lagerkörper 3 drehbar gelagert ist. Das Planetenrad 27 kann eine Lauffläche 28 aufweisen, welche mit der Gleitfläche 4 zusammenwirkt. Die Lauffläche 28 kann somit ebenfalls für die gleichzeitige Axiallagerung und Radiallagerung ausgebildet sein.

Wie aus Fig. 10 weiters ersichtlich, kann vorgesehen sein, dass ein Axiallagerelement 29 ausgebildet ist, welches einen weiteren Axiallagerbereich 30 aufweist. Durch das Axiallagerelement 29 kann eine Axiallagerung in beide Axialrichtungen erreicht werden.

Insbesondere kann vorgesehen sein, dass mittels des Axiallagerelementes 29 ein axiales Lagerspiel eingestellt werden kann. Hierzu kann beispielsweise vorgesehen sein, dass das Axiallagerelement 29 mittels eines Befestigungsgewindes am Trägerkörper 2 angeordnet ist, um die axiale Einstellbarkeit zu erreichen.

Zum Herstellen des Gleitlageraufbaues nach Fig. 10 kann vorgesehen sein, dass in einem ersten Verfahrensschritt der Trägerkörper 2 in Form eines Planetenradzapfens bereitgestellt wird. Die Trägerkörperverbindungsfläche 5 kann hierbei einen zylindrischen Abschnitt aufweisen, an welchen ein Radius anschließt. Weiters kann vorgesehen sein, dass die Trägerkörperverbindungsfläche 5 eine Oberflächenstrukturierung in Form eines Kreuzrändel oder Links-Rechtsrändels aufweist.

In einem anschließenden Verfahrensschritt kann der Lagerkörper 3, welcher als Hülse ausgebildet ist, axial auf den Trägerkörper 2 aufgeschoben werden. In einem anschließenden Verfahrensschritt kann der Lagerkörper 3 mittels eines des Magnetkrafterzeugers (16) auf den Trägerkörper 2 aufgepresst werden und somit mit diesem verbunden werden.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

| | | | |
|---|---|---|---|
| 1 | Mehrschichtgleitlager | 29 | Axiallagerelement |
| 2 | Trägerkörper | 30 | weiterer Axiallagerbereich |
| 3 | Lagerkörper | | |
| 4 | Gleitfläche | | |
| 5 | Trägerkörperverbindungsfläche | | |
| 6 | Lagerkörperverbindungsfläche | | |
| 7 | Oberflächenstrukturierung | | |
| 8 | Steg | | |
| 9 | Hinterschneidung | | |
| 10 | Stegkopf | | |
| 11 | Stegbasis | | |
| 12 | Kopfquerschnittsbreite | | |
| 13 | Basisquerschnittsbreite | | |
| 14 | Durchmesser Lagerkörperverbindungsfläche | | |
| 15 | Durchmesser Trägerkörperverbindungsfläche | | |
| 16 | Magnetkrafterzeuger | | |
| 17 | Spule | | |
| 18 | Abstand | | |
| 19 | erste Elektrode | | |
| 20 | zweite Elektrode | | |
| 21 | Gleitlagerherstellvorrichtung | | |
| 22 | Haltevorrichtung | | |
| 23 | Formelement | | |
| 24 | Oberflächenelement | | |
| 25 | Axiallagerbereich | | |
| 26 | Radiallagerbereich | | |
| 27 | Planetenrad | | |
| 28 | Lauffläche | | |

## Patentansprüche

1. Verfahren zum Herstellen eines Mehrschichtgleitlagers (1), umfassend die Verfahrensschritte:
- Bereitstellen eines Trägerkörpers (2) mit einer Trägerkörperverbindungsfläche (5), wobei an der Trägerkörperverbindungsfläche (5) eine Oberflächenstrukturierung (7) ausgebildet ist und wobei der Trägerkörper (2) an der Trägerkörperverbindungsfläche (5) ein Trägerkörpermaterial mit einer Trägerkörperfestigkeit aufweist;
- Bereitstellen eines Lagerkörpers (3) mit einer Lagerkörperverbindungsfläche (6), wobei der Lagerkörper (3) an der Lagerkörperverbindungsfläche (6) ein Lagerkörpermaterial mit einer Lagerkörperfestigkeit aufweist;
- Anordnen des Lagerkörpers (3) am Trägerkörper (2), wobei eine Trägerkörperverbindungsfläche (5) einer Lagerkörperverbindungsfläche (6) zugewandt wird;
- Aneinanderpressen des Lagerkörpers (3) und des Trägerkörpers (2), wobei der Lagerkörper (3) an der Lagerkörperverbindungsfläche (6) durch Einwirkung der Oberflächenstrukturierung (7) der Trägerkörperverbindungsfläche (5) plastisch verformt wird und eine formschlüssige Verbindung mit der Trägerkörperverbindungsfläche (5) bildet.

2. Verfahren nach Anspruch 1, **dadurch gekennzeichnet, dass** der Lagerkörper (3) durch ein Gießverfahren, insbesondere durch ein Beltcaster-Gießverfahren, hergestellt wird.

3. Verfahren nach Anspruch 1 oder 2, **dadurch gekennzeichnet, dass** die Oberflächenstrukturierung (7) Stege (8) aufweist, wobei die Stege (8) beim Aneinanderpressen des Lagerkörpers (3) und des Trägerkörpers (2) verformt werden.

4. Verfahren nach Anspruch 3, **dadurch gekennzeichnet, dass** die Stege (8) im Wesentlichen im rechten Winkel zur Trägerkörperverbindungsfläche (5) angeordnet sind.

5. Verfahren nach einem der Ansprüche 2 bis 4, **dadurch gekennzeichnet, dass** sich die Stege (8) während dem Aneinanderpressen des Lagerkörpers (3) und des Trägerkörpers (2) quer zu deren Längserstreckung verbiegen.

6. Verfahren nach einem der Ansprüche 2 bis 5, **dadurch gekennzeichnet, dass** die Stege (8) in einem Stegkopf (10) eine Kopfquerschnittsbreite (12) aufweisen und dass die Stege (8) an einer Stegbasis (11) eine Basisquerschnittsbreite (13) aufweisen, wobei die Kopfquerschnittsbreite (12) größer ist als die Basisquerschnittsbreite (13).

7. Verfahren nach einem der vorhergehenden Ansprüche, **dadurch gekennzeichnet, dass** die Oberflächenstrukturierung (7) der Trägerkörperverbindungsfläche (5) durch Kreuzrändeln oder Links-Rechtsrändeln, hergestellt wird.

8. Verfahren nach einem der vorhergehenden Ansprüche, **dadurch gekennzeichnet, dass** die Oberflächenstrukturierung (7) der Trägerkörperverbindungsfläche (5) durch mechanische Bearbeitung hergestellt wird.

9. Verfahren nach einem der vorhergehenden Ansprüche, **dadurch gekennzeichnet, dass** das Aneinanderpressen des Lagerkörpers (3) und des Trägerkörpers (2) mittels eines Magnetkrafterzeugers (16) erfolgt, welcher eine Magnetkraft auf den Lagerkörper (3) aufbringt, wobei der Lagerkörper (3) mittels des Magnetkrafterzeugers (16) an den Trägerkörper angepresst wird.

10. Verfahren nach Anspruch 9, **dadurch gekennzeichnet, dass** der Magnetkrafterzeuger (16) eine mit Strom beaufschlagte Spule (17) aufweist, wobei mittels der Spule (17) eine elektromagnetische Kraft auf den Lagerkörper (3) aufgebracht wird.

11. Mehrschichtgleitlager (1), umfassend:
- Einen Trägerkörper (2) mit einer Trägerkörperverbindungsfläche (5), wobei an der Trägerkörperverbindungsfläche (5) eine Oberflächenstrukturierung (7) ausgebildet ist und wobei der Trägerkörper (2) an der Trägerkörperverbindungsfläche (5) ein Trägerkörpermaterial mit einer Trägerkörperfestigkeit aufweist;
- Einen Lagerkörper (3) mit einer Lagerkörperverbindungsfläche (6), wobei der Lagerkörper (3) an der Lagerkörperverbindungsfläche (6) ein Lagerkörpermaterial mit einer Lagerkörperfestigkeit aufweist, wobei die Lagerkörperfestigkeit kleiner ist als die Trägerkörperfestigkeit, wobei der Lagerkörper (3) am Trägerkörper (2) appliziert ist, wobei eine Trägerkörperverbindungsfläche (5) einer Lagerkörperverbindungsfläche (6) zugewandt ist und wobei der Lagerkörper (3) an der Lagerkörperverbindungsfläche (6) plastisch in die Oberflächenstrukturierung (7) der Trägerkörperverbindungsfläche (5) verformt ist und eine formschlüssige Verbindung mit der Trägerkörperverbindungsfläche (5) bildet.

12. Mehrschichtgleitlager (1) nach Anspruch 11, **dadurch gekennzeichnet, dass** die Oberflächenstrukturierung (7) der Trägerkörperverbindungsfläche (5) Kreuzrändel oder Links-Rechtsrändel aufweist.

13. Mehrschichtgleitlager (1) nach Anspruch 11 oder 12, **dadurch gekennzeichnet, dass** am Lagerkörper (3) eine Gleitfläche (4) ausgebildet ist, welche einen Axiallagerbereich (25) und einen Radiallagerbereich (26) aufweist.
